# EUROPEAN PATENT SPECIFICATION

(11) **EP 0 379 348 B1**
(45) Date of publication and mention of the grant of the patent: **09.11.1994**
(21) Application number: 90300473.7
(22) Date of filing: 17.01.1990
(51) Int. Cl.: B60S 1/38

(54) **Windscreen wiper blade**
Scheibenwischerblatt
Balai d'essuie-glace

(30) Priority: 19.01.1989 GB 8901148
(43) Date of publication of application: 25.07.1990
(73) Proprietor: TRICO-FOLBERTH LIMITED, Brentford Middlesex TW8 9HP (GB)
(72) Inventor: Mower, Peter, Twickenham, Middlesex (GB)
(74) Representative: Pedder, James Cuthbert

(56) References cited:
- EP-A- 0 280 806
- EP-A- 0 287 464
- DE-A- 2 722 135

## Description

This invention relates to a windscreen wiper blade.

With the advent of automobiles which can travel at ever higher speeds, problems have become apparent with traditional windscreen wiper systems due to the action of air flow on them generated by the high speeds now in use. The basic problem resides in the effect that the air flow has in lifting the windscreen wiper blades from the screen and thus preventing the driver from having a clear view.

A number of proposals have been made for dealing with this problem ranging from increasing the pressure at which the wiper blade is applied to the screen to the provision of vanes on various parts of the windscreen wiper to cause the airflow to act to press the windscreen wiper blade on to the screen, often with a pressure which varies in dependence on the air speed, or at least to prevent it from having a lifting action.

While a number of these methods have worked satisfactorily in practice, they have tended to be expensive with respect to material and labour used in their construction. An aerodynamic windscreen wiper blade according to the preamble of claim 1 is disclosed in EP-A-0 280 806.

The present invention seeks to provide a windscreen wiper blade which is relatively inexpensive to manufacture and which overcomes some or all of the above problems.

According to the invention, there is provided a windscreen wiper blade comprising a harness carrying a blade rubber for wiping contact with the windscreen and having means for connection with a wiper arm for driving the blade across the screen, in which the longitudinal central plane of symmetry of the major part of the harness lies at an angle to the longitudinal central plane of symmetry of the blade rubber.

Preferably, the longitudinal central plane of the harness is inclined in a direction towards the airflow direction.

Where the harness comprises a main yoke and at least two subsidiary yokes, the subsidiary yokes may be twisted adjacent to those ends to which the blade rubber is attached to provide the inclination. The centre part of the main yoke may be twisted in the opposite direction to the subsidiary yokes so that the windscreen wiper arm attachment lies at right angles to the central longitudinal plane of the blade rubber. Alternatively, twisting of the main yoke may be omitted, only the arm attachment lying at right angles to the central longitudinal plane of the blade rubber. In another form of the invention, the arm attachment may follow the line of the main yoke, for use with an arm provided with a compensatory twist.

The invention will now be described in greater detail, by way of example, with reference to the drawings, in which:-
Figure 1 is a perspective view of a windscreen wiper blade in accordance with a first embodiment of the invention;
Figure 2 is an end view of the windscreen wiper blade as shown in figure 1;
Figure 3 is a view similar to figure 1 but showing a second embodiment of the invention;
Figure 4 is an end view of the windscreen wiper blade as shown in figure 3;
Figure 5 is a view similar to figure 1 but showing a third embodiment of the invention, and
Figure 6 is an end view of the windscreen wiper blade as shown in figure 5;

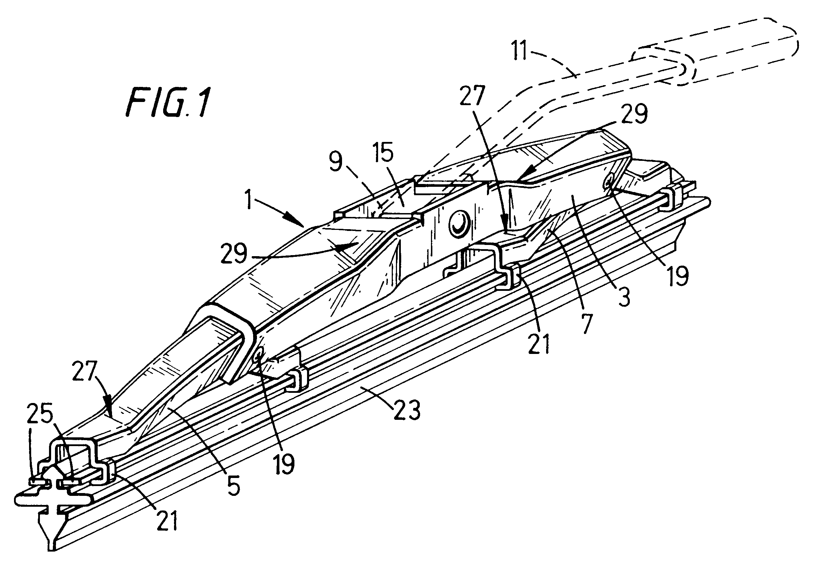

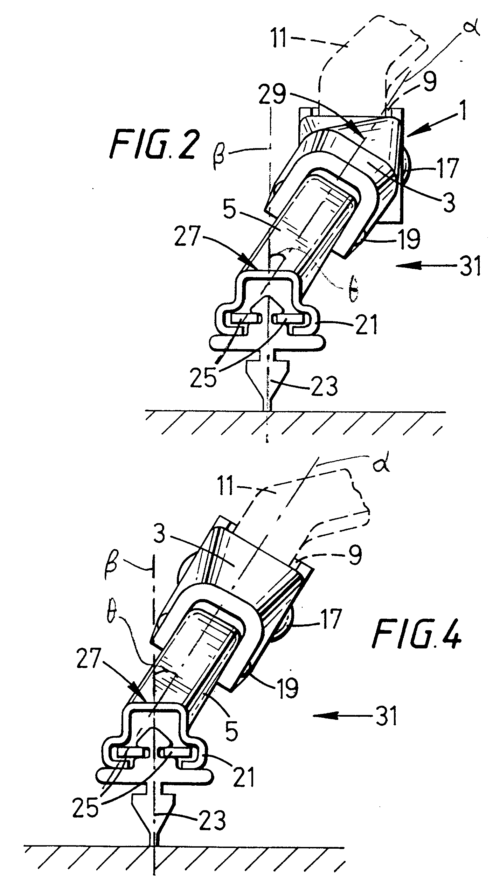

Referring firstly to figures 1 and 2, there is shown a windscreen wiper blade 1 comprising a main yoke 3 and two subsidiary yokes 5 and 7 depending therefrom. The main yoke 1 is provided with an attachment means 9 for the attachment of a windscreen wiper arm (shown in broken lines at 11). To this end, the main yoke 3 has a central aperture 15 in which is located a transverse pivot pin 17.

The subsidiary yokes 5 and 7 are pivoted at their mid points at 19 to the main yoke 3 and carry at their ends claws 21 by means of which the blade rubber 23 is carried. As shown in the drawing, the blade rubber 23 is provided, in known manner, with a supporting vertebra in the form of a pair of rails 25 which are engaged by the claws 21.

In order to mitigate the lifting effect of air flow on the blade, the centre part of the harness is inclined such that its central longitudinal plane α is inclined by an angle ϑ to the central longitudinal plane β of the blade rubber 23 (see figure 2). To this end, the claw ends of the subsidiary yokes 5 and 7 are twisted as shown at 27, a matching but opposite twist being provided in the main yoke 3 on either side of the arm attachment 9 at 29. As can be seen more particularly in figure 2, this leaves the arm attachment portion of the main yoke 3 and the blade rubber 23 parallel but offset while the intermediate portion of the harness is inclined to both. It is envisaged that, with the blade as orientated in figure 2, the airflow will be in the direction of the arrow 31.

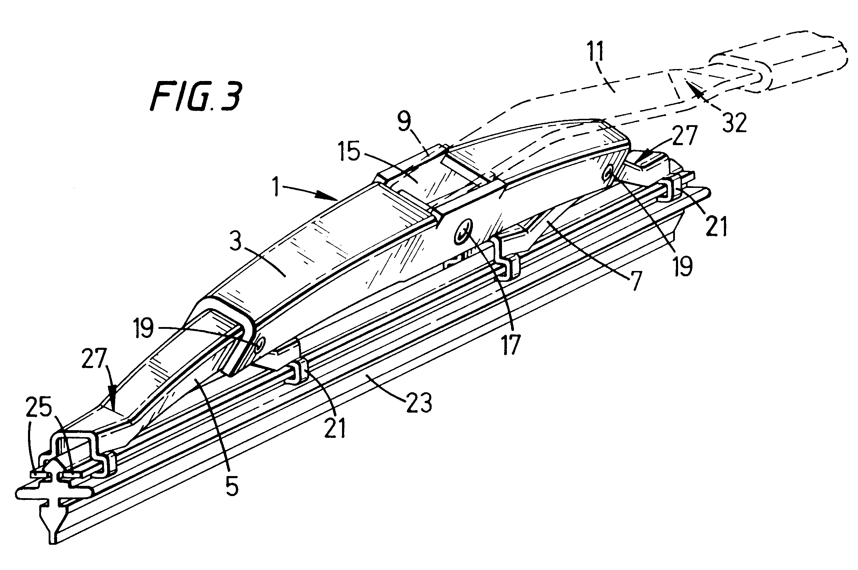

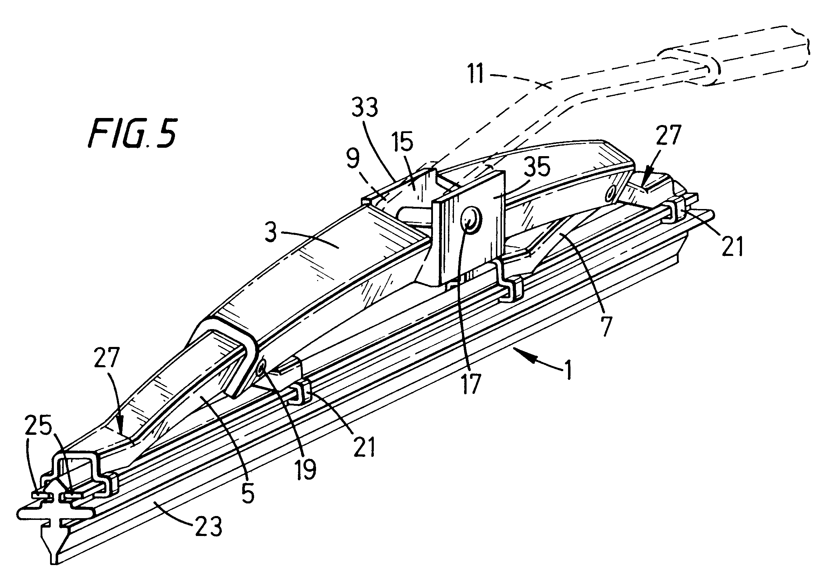

Figures 3 and 4 show a second embodiment of the invention. This embodiment is basically the same as the embodiment of figures 1 and 2, but in this case the twists 29 are missing, leaving the arm attachment 9 inclined also. In this case, the arm 11 would be provided with a twist, such as that shown at 32, to enable the main part of the blade 1 to be inclined while maintaining the wiper rubber 23 substantially at right angles to the windscreen.

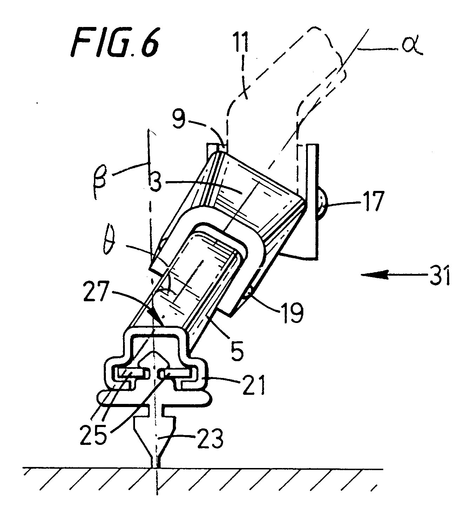

While this latter embodiment may be undesirable in certain instances, since it requires a specially formed arm, the advantage of only needing one twist can be maintained while enabling the use of a standard arm. Such an embodiment is shown in figures 5 and 6. In this embodiment, the main yoke 3 remains inclined but the sides 33 and 35 of the aperture 15 of the arm attachment 9 are formed so as to be parallel with the central longitudinal plane of the blade rubber 23 and the side 35 is elongate so as to enable the pivot pin 17 to lie at right angles to the central longitudinal plane of the blade rubber 23.

Tests of these blades has demonstrated that they are less susceptible to wind-lift than similar non-inclined blades and will provide adequate wiping of the windscreen at higher speeds.

It will be understood that the exact construction of the wiper blade itself is not significant as far as the effectiveness of the invention is concerned although, of course, some constructions will operate better than others. Thus, for example, other known blade constructions having primary, secondary and tertiary yokes can be used, the blade end twists being only provided adjacent to the claws and, in particular, not at any end of a secondary yoke which supports a tertiary yoke. Different shaped wiper rubbers may be used as may different types of vertebra.

The exact construction of the arm attachment may be varied in any known way to provide known attachments to wiper arms. This includes those types in which no pivot pin is used and even extends to connections in which the arm and main yoke lie side by side.

It will of course be appreciated that in automobiles having dual wiper systems, it is not necessary, by reason of the type of sweep involved, for both blades to be of the type in accordance with the invention. Nevertheless, both blades may be of the same type if required for aesthetic reasons.

## Claims

1. A windscreen wiper blade comprising a harness (3,5,7) carrying a blade rubber (23) for wiping contact with the windscreen and having means (17) for connection with a wiper arm (11) for driving the blade (1) across the screen, characterised in that the longitudinal central plane of symmetry (α) of the major part of the harness (3,5,7) lies at an angle (ϑ) to the longitudinal central plane of symmetry (β) of the blade rubber (23).

2. A windscreen wiper blade as claimed in claim 1, characterised in that the longitudinal central plane (α) of the harness (3,5,7) is inclined in a direction towards the airflow direction (31).

3. A windscreen wiper blade as claimed in claim 1 or 2, characterised in that the harness (3,5,7) comprises a main yoke (3) and at least two subsidiary yokes (5,7), the subsidiary yokes (5,7) are twisted adjacent to those ends to which the blade rubber (23) is attached to provide the inclination.

4. A windscreen wiper blade as claimed in claim 3, characterised in that the centre part of the main yoke (3) is twisted in the opposite direction to the subsidiary yokes (5,7) so that the windscreen wiper arm attachment (9) lies at right angles to the central longitudinal plane (β) of the blade rubber (23).

5. A windscreen wiper blade as claimed in claim 3, characterised in that the arm attachment (9) lies at right angles to the central longitudinal plane (β) of the blade rubber (23).

6. A windscreen wiper blade as claimed in claim 3, characterised in that the arm attachment (9) follows the line of the main yoke (3), for use with an arm (11) provided with a compensatory twist (32).

## Patentansprüche

1. Scheibenwischerblatt mit einem Bügel (3, 5, 7), an dem ein Wischgummi (23) für Wischkontakt mit einer Windschutzscheibe angebracht ist, und der mit einem Glied (17) zur Verbindung mit einem Scheibenwischerarm (11) versehen ist um das Wischgummi (23) über die Windschutzscheibe zu bewegen, dadurch gekennzeichnet, daß die Symmetrieebene (α) [Klappsymmetrie] in der Längsrichtung des Hauptbauteile des Bügels (3, 5, 7) in einem Winkel (ϑ) zu der Symmetrieebene (β) [Klappsymmetrie] in der Längsrichtung des Wischgummis (23) angeordnet ist.

2. Scheibenwischerblatt nach Anspruch 1, dadurch gekennzeichnet, daß die Symmetrieebene (α) [Klappsymmetrie] in der Längsrichtung des Bügels (3, 5, 7) bezüglich der Richtung des Windes (31) in einem Winkel angeordnet ist.

3. Scheibenwischerblatt nach einem der Ansprüche 1 oder 2, dadurch gekennzeichnet, daß der Bügel (3, 5, 7) ein erstes Bauteil (3) und wenigstens zwei weitere Bauteile (5, 7) enthält, wobei die weiteren Bauteile (5, 7) gegenüber den Enden verdreht sind, an denen das Wischgummi (23) befestigt ist, um den Winkel herzustellen.

4. Scheibenwischerblatt nach Anspruch 1, dadurch gekennzeichnet, daß der hintere Bereich des ersten Bauteils (3) in die entgegengesetzte Richtung wie die weiteren Bauteile (5, 7) verdreht ist, so daß die Scheibenwischerarmbefestigung (9) in einem rechten Winkel zur Symmetrieebene (β) [Klappsymmetrie] in der Längsrichtung des Wischgummis (23) angeordnet ist.

5. Scheibenwischerblatt nach Anspruch 3, dadurch gekennzeichnet, daß die Scheibenwischerarmbefestigung (9) in einem rechten Winkel zur Symmetrieebene (β) [Klappsymmetrie] in der Längerichtung der Wischgummis (23) angeordnet ist.

6. Scheibenwischerblatt nach Anspruch 3, dadurch gekennzeichnet, daß die Scheibenwischerarmbefestigung (9) entsprechend dem Winkel des ersten Bauteils (3) angeordnet ist, um in Verbindung mit einem Arm (11) verwendet zu werden, in dem eine ausgleichende Verdrehung (32) vorgesehen ist.

## Revendications

1. Balai d'essuie-glace pour pare-brise comprenant un harnais (3, 5, 7) portant une lame de caoutchouc (23) destinée à venir en contact frottant avec le pare-brise et présentant un moyen (17), pour être relié à un bras d'essuie-glace (11) destiné à entraîner le balai (1) sur le pare-brise, caractérisé en ce que le plan longitudinal médian de symétrie (α) de la partie principale du harnais (3, 5, 7) forme un angle () avec le plan longitudinal médian de symétrie (β) de la lame de caoutchouc (23).

2. Balai d'essuie-glace pour pare-brise selon la revendication 1, caractérisé en ce que le plan longitudinal médian (α) du harnais (3, 5, 7) est incliné dans une direction orientée dans le sens de la direction (31) de déplacement de l'air.

3. Balai d'essuie-glace pour pare-brise selon la revendication 1 ou 2, caractérisé en ce que le harnais (3, 5, 7) comprend un étrier principal (3) et au moins deux étriers secondaires (5, 7), les étriers secondaires (5, 7) étant tordus au voisinage de leurs extrémités auxquelles est fixé la lame de caoutchouc (23), pour définir l'inclinaison.

4. Balai d'essuie-glace pour pare-brise selon la revendication 3, caractérisé en ce que la partie centrale de l'étrier principal (3) est tordue en sens opposé aux étriers secondaires (5, 7), de manière que la fixation (9) du bras d'essuie-glace pour pare-brise soit perpendiculaire au plan longitudinal médian (β) de la lame de caoutchouc (23).

5. Balai d'essuie-glace pour pare-brise selon la revendication 3, caractérisé en ce que la fixation (9) du bras est perpendiculaire au plan longitudinal médian (β) de la lame de caoutchouc (23).

6. Balai d'essuie-glace pour pare-brise selon la revendication 3, caractérisé en ce que la fixation (9) du bras suit l'allure de l'étrier principal (3), afin d'être utilisé avec un bras (11) ayant une torsion compensatoire (32).
